# EUROPEAN PATENT APPLICATION

(11) **EP 4 458 881 A1**
(43) Date of publication of application: **06.11.2024**
(21) Application number: 22913005.9
(22) Date of filing: 19.03.2022
(51) Int. Cl.: C08G 63/85, C08G 63/87, C08G 63/183, C08G 63/181, C08G 63/185, C08G 63/16, C08K 5/521

(54) **TITANIUM-BASED COMPOSITE CATALYST FOR POLYESTER SYNTHESIS AS WELL AS PREPARATION AND APPLICATION THEREOF**

(30) Priority: 31.12.2021 CN 202111649537
(71) Applicant: Jiangsu New Horizon Advanced Functional Fiber Innovation Center Co., Ltd., Suzhou, Jiangsu 215228 (CN)
(72) Inventor: XU, Jinlong, Suzhou, Jiangsu 215228 (CN); WEI, Tian, Suzhou, Jiangsu 215228 (CN); MEI, Feng, Suzhou, Jiangsu 215228 (CN); JI, Peng, Suzhou, Jiangsu 215228 (CN); WANG, Huaping, Suzhou, Jiangsu 215228 (CN)
(74) Representative: Franks & Co Limited
(86) International application number: PCT/CN2022/081847
(87) International publication number: WO 2023/123699

(57) **Abstract**

A titanium-based composite catalyst for polyester synthesis, preparation and application thereof are provided. The preparation method is: preparing a titanium-silicon catalyst precursor first, adding the titanium-silicon catalyst precursor to a biochar material in a certain mass ratio and mixing evenly, and aging, drying, calcining and wet grinding to obtain a titanium-silicon composite catalyst, and then mixing the titanium-silicon composite catalyst and a phosphate ester with a mass ratio of 1:(0.001-0.5) to obtain the titanium-based composite catalyst for polyester synthesis; the prepared titanium-based composite catalyst for polyester synthesis is composed of the phosphate ester and the titanium-silicon composite catalyst, wherein the phosphate ester is adsorbed and wrapped on the surface of the titanium-silicon composite catalyst; the phosphate ester is combined with a titanium-silicon catalyst in the titanium-silicon composite catalyst by van der Waals force. When using the titanium-based composite catalyst for polyester synthesis of the present invention to prepare polyesters, the addition amount is small, and the prepared polyester has a good hue and a narrow molecular weight distribution.

## Description

### Technical Field

The present invention belongs to the technical field of catalysts, and more particularly, relates to a titanium-based composite catalyst for polyester synthesis, preparation and application thereof.

### Background

Polyester is a widely used synthetic material, among which polyethylene terephthalate (PET) has the largest output. Due to its excellent performance, it is widely used in industrial products such as fibers, plastics and films. In order to increase the reaction rate and improve production capacity, catalysts need to be added in the production process of PET. Catalysts not only affect esterification and polycondensation reactions, but also have an important influence on various side reactions, reaction selectivity and product performance. Therefore, catalysts play a vital role in the production process of polyester. Through the study of the catalytic mechanism of polyester reactions, it is found that the metal elements that can catalyze the polymerization reaction of PET are: lithium, sodium, potassium, boron, magnesium, calcium, germanium, antimony, titanium, manganese, iron, cobalt, aluminum, copper and silver and other metal halides, oxides, alcoholates, acetates and organic matter, etc., involving almost all main and sub-group elements.

Currently, catalysts used in polyester industrial production are mainly antimony compounds, such as antimony trioxide, antimony acetate and antimony glycol. Since antimony-containing compounds may cause harm to the environment and human body, new catalysts that can replace the Sb series have attracted widespread attention, among which titanium-based catalysts have the most promising application prospects.

At present, in the actual production of polyester (including PET , PTT and PBT, etc.), tetrabutyl titanate is mostly used as a catalyst, which has a better catalytic effect, but the defect is easy to hydrolyze and partially inactivated, and its hydrolysis not only reduces the catalytic activity but also easily blocks the pipeline, causing scaling of the reactor, blocking the heating tubes, reducing the service life of the melt filter, and restricting the long-term operation of the device; when the titanium content increases, it affects the thermal stability and melting stability of the slice, thereby reducing the molecular weight, increasing the terminal carboxyl value, and darkening the color. In addition, the hydrolysis products of titanium salts such as titanium oxalate, titanium tetrachloride, and titanium sulfate are not well soluble in butanediol , and the catalytic effect is not as good as that of organic titanates. Therefore, it is very necessary to select a catalyst that can inhibit the formation of tetrahydrofuran, is resistant to hydrolysis, has a small dosage, is highly active, and is convenient to add.

Chinese patent CN1938361B discloses a method of using a titanium compound and a metal compound of group 2A of the periodic table as a catalyst for synthesizing PBT, and the obtained PBT has excellent properties such as color tone, thermal stability, and transparency. However, the catalyst is a titanium compound and another metal compound of group 2A of the periodic table. The titanium compound used is easily hydrolyzed when it encounters water, and is prone to scaling and has an impact on equipment and pipelines when used for a long period of time. The other metal compound is solid, and it is inconvenient to add it continuously to the reaction system.

Chinese patent CN110054765B discloses a preparation method and application of a silicon-titanium composite homogeneous catalyst for polyester synthesis, the preparation method comprises: 1) dissolving a titanium compound and a silicon compound in a mixed solvent consisting of ethylene glycol and another alcohol solvent, adding a first co-catalyst and a second co-catalyst, and distilling at 80-120 °C under normal pressure; 2) adding a first complexing agent and a second complexing agent, and continuing to distill at 80-120 °C under normal pressure to obtain a silicon-titanium composite homogeneous catalyst. The invention changes the titanium-silicon ratio, introduces sulfonates, organic ligands and phosphoric acid complexing agents during the catalyst preparation process, wherein the phosphoric acid complexing agent can coordinate the titanium atom, change its electronic environment, improve the activity and stability of the catalyst, and also improve the selectivity, effectively reducing the occurrence of side reactions, and preventing the polyester product from yellowing. However, the preparation process is cumbersome and requires the synergistic use of multiple cocatalysts, the added proportions of the compounded sulfonates, organic ligands and phosphoric acid complexing agents are relatively high, and they all need to be evenly dispersed in the polyester system to play the above role.

Therefore, how to realize that titanium-based catalysts maintain a certain high activity in polyester synthesis and not easy to deactivate, while ensuring the quality of polyester, is the key to the research.

### Summary

In order to solve the above problems existing in the prior art, the present invention provides a titanium-based composite catalyst for polyester synthesis, preparation and application thereof. The technical solution provided by the invention solves the problems that the existing titanium catalyst has high activity, is difficult to control, is easy to deactivate, and the color of polyester turns yellow, which affects its application. The invention uses a biochar with a porous structure as a catalyst carrier, the titanium silicon catalyst is attached to the pores, and the activity is regulated by phosphorus-containing functional groups, when used to catalyze polyester synthesis, the occurrence of side reactions is effectively reduced, and the polyester product is prevented from turning yellow. The obtained product has a narrow molecular weight distribution range, good polyester spinning performance, and a lower addition amount during use.

To this end, the technical schemes of the invention are as follows:

A method for preparing a titanium-based composite catalyst for polyester synthesis, comprising the following steps:
(1) adding a silicon compound, ethanol, distilled water and nitric acid to a reactor sequentially and mixing, and then adding a titanium compound to prepare a titanium-silicon catalyst precursor;
(2) adding the titanium-silicon catalyst precursor obtained in step (1) to a biochar material in a certain mass ratio and mixing evenly, and aging, drying, calcining and wet grinding to obtain a titanium-silicon composite catalyst;

wherein the titanium-silicon composite catalyst consists of a biochar with a porous structure and a titanium-silicon catalyst loaded in the porous structure; the loading is that the titanium-silicon catalyst is embedded in the porous biochar during the wet grinding process, and the titanium-silicon catalyst and the biochar are combined based on physical forces; the biochar in the titanium-silicon composite catalyst has a porous structure, and the biochar plays a role of loading in physical space, loading the titanium-silicon catalyst in its porous structure, and macroscopically it is not possible to distinguish the two compositions, microscopically it is two compositions;
wherein an average pore size of the pores in the biochar with porous structure is 50-200 nm;
wherein an average particle size of the titanium-silicon catalyst in the titanium-silicon composite catalyst is 20-100 nm;
Biochar is a highly aromatic, carbon-rich porous solid granular material produced by thermochemical conversion of carbon-rich biomass (i.e., biochar material) under anaerobic or anoxic conditions. It has a rich pore structure, a large specific surface area, and contains a large number of oxygen-containing active groups on the surface. The biochar material with a lignin content of not less than 20 % used in the invention refers to the lignin content is to be 20 % and above, including coniferous wood (26-30%) and broad-leaved wood (23-30%), while the lignin content of the herbaceous plant is generally 16% or less, and the expected effect cannot be obtained.

In the biochar material, the pyrolysis of cellulose and hemicellulose mainly produces volatile products and a small amount of char, while lignin pyrolysis mainly produces char and a small amount of water, so biomass with a high lignin content is more suitable as a raw material for the production of the biochar material.

(3) mixing the titanium-silicon composite catalyst and a phosphate ester with a mass ratio of 1 :(0.001-0.5) to obtain the titanium-based composite catalyst for polyester synthesis. Because biochar is a porous material with a large specific surface area, when the size of the porous structure matches the size of the loaded titanium-silicon catalyst, the phosphate ester can be adsorbed into the porous structure, thereby forming the titanium-based composite catalyst for polyester synthesis.

The following preferred technology program is presented to give a detailed description for this invention:
The said method for preparing a titanium-based composite catalyst for polyester synthesis, wherein the silicon compound is more than one selected from tetramethyl silicate, tetraethyl silicate, tetrapropyl silicate and tetrabutyl silicate;
wherein the titanium compound is more than one selected from tetraethyl titanate, tetrapropyl titanate, tetraisopropyl titanate, tetrabutyl titanate, tetraisooctyl titanate and titanium tetrachloride;
wherein the phosphate ester is more than one selected from a phosphate monoester, a phosphate diester and a phosphate triester.

The said method for preparing a titanium-based composite catalyst for polyester synthesis, wherein the lignin content in the biochar material is not less than 20 %, in order to ensure that the size of the pores in the biochar with porous structure meets the requirements of the invention.

The said method for preparing a titanium-based composite catalyst for polyester synthesis, wherein the average particle size of the titanium-silicon composite catalyst is 100-400 nm.

The said method for preparing a titanium-based composite catalyst for polyester synthesis, wherein the ratio of the added mass of the titanium compound to the mass of the silicon compound is 4:6-6:4 in step (1).

The said method for preparing a titanium-based composite catalyst for polyester synthesis, wherein the specific steps are as follows:
(1) a preparation of the titanium-silicon catalyst precursor (using sol-gel method): first, adding the silicon compound, ethanol, distilled water and nitric acid to the reactor sequentially and mixing; then stirring and heating the mixed substance while refluxing; after a silicon compound is completely hydrolyzed (silicon compounds are compounds insoluble or slightly soluble in water, when the silicon compound disappears in the water, it can be determined that complete hydrolysis has occurred), adding a titanium compound and mixing evenly; using a constant-pressure buret to slowly add the appropriate amount of distilled water dropwise at a certain rate, and refluxing again after dropping to prepare the titanium-silicon catalyst precursor (also referred to as "TiO2~SiO2 gel"); since the catalytic object of the invention is polyester, including PET , PBT , PTT, etc., different types of polyesters have different requirements for the selectivity and catalytic activity of the catalyst, so it is necessary to change the ratio of titanium to silicon; the method of the invention can achieve regulation by changing the addition ratio of silicon compound to titanium compound during the preparation of the titanium-silicon catalyst precursor. The new catalyst with titanium as the main active component and silicon component meets the requirements of non-toxicity and environmental protection;
(2) a preparation of the titanium-silicon composite catalyst: adding the titanium-silicon catalyst precursor obtained in step (1) to the biochar material in a certain mass ratio and mixing evenly, and aging the mixed mixture at room temperature (generally 25 °C) before drying to remove water and ethanol from a reaction system; then putting the dried mixture in a muffle furnace, setting a calcination temperature, a heating rate and a calcination time; after the calcination is completed, taking out the calcined product and cooling naturally, and finally obtain the titanium-silicon composite catalyst by wet grinding;
   the grinding process is to mechanically destroy the solid material by mechanical force to form a smaller material, the hardness of the silicon catalyst precursor in the invention after calcination is much greater than that of the biochar material, the small-sized titanium silicon catalyst powder is squeezed into the porous structure of the biomass under the mechanical force;
(3) a preparation of the titanium-based composite catalyst for polyester synthesis: mixing the titanium-silicon composite catalyst with the phosphate ester to obtain the titanium-based composite catalyst for polyester synthesis.

The said method for preparing a titanium-based composite catalyst for polyester synthesis, in step (1), when adding the silicon compound, ethanol, distilled water and nitric acid sequentially, a molar ratio of the silicon compound, ethanol, distilled water and nitric acid is 1:(1.5-2):(0.1-0.5):(0.01-0.1); parameters for stirring and heating while refluxing are: a heating temperature of 50-80 °C, a stirring speed of 500-1 000 r/min, and a reflux time of 2-4 h; adding dropwise at a certain rate refers to a dropwise addition rate of 10-50 mL/min; refluxing again after dropping means after dropping, refluxing at 50-80 °C for 2-6 h.

The said method for preparing a titanium-based composite catalyst for polyester synthesis, in step (2), the mass ratio of the titanium-silicon catalyst precursor to the biochar material is (0.01-0.2): 1; drying after aging refers to dry in a blast drying oven at 100-140 °C for 8-20 h; the calcination temperature is 400-800 °C, the heating rate is 10 °C/min, and the calcination time is 2-5 h.

The invention also provides a titanium-based composite catalyst for polyester synthesis prepared by the method as described above, wherein the prepared titanium-based composite catalyst for polyester synthesis consists of the phosphate ester and the titanium-silicon composite catalyst;
wherein the phosphate ester is adsorbed and wrapped on the surface of the titanium-silicon composite catalyst; the phosphate ester is combined with the titanium-silicon catalyst in the titanium-silicon composite catalyst by van der Waals force;
in the titanium-based composite catalyst for polyester synthesis, the mass ratio of the titanium-silicon composite catalyst to the phosphate ester is 1:(0.1-1).

The invention also provides an application of the titanium-based composite catalyst for polyester synthesis as described above, using a dicarboxylic acid or its derivatives and a diol to carry out the esterification reaction at 230-260 °C, and adding the titanium-based composite catalyst for polyester synthesis before the esterification reaction, the pressure of the esterification reaction does not exceed 0.3 MPa, and the esterification reaction time is 1-3 h, and obtaining a prepolymer; and then carrying out the polycondensation reaction of the prepolymer under vacuum conditions, the polycondensation reaction temperature is 270-290 °C, the pressure of the polycondensation reaction is lower than 100 Pa, and the polycondensation reaction time is 1-4 h, finally obtaining a polyester;
based on the equivalent of titanium in the catalyst, the added amount of the titanium-based composite catalyst for polyester synthesis is 1-10 ppm (the added amount of catalysts in the prior art varies by type, if it is a non-titanium system catalyst, such as an antimony-based catalyst, the added amount must be more than 200 ppm, and the added amount of titanium in the existing titanium-based catalyst is more than 10 ppm).

The said dicarboxylic acid or its derivative is more than one selected from terephthalic acid, phthalic acid, isophthalic acid, diphenyl diphthalic acid, oxalic acid, succinic acid, adipic acid, dimethyl terephthalate and diethyl terephthalate;
the said diol is more than one selected from ethylene glycol, propylene glycol, butylene glycol and hexylene glycol.

The principle of the present invention is as follows:
Phosphate esters, as auxiliary antioxidants, have good anti-discoloration effects and can increase antioxidant properties and light stability. Phosphate esters are also introduced in the prior art to adjust the color of polyester, but the phosphate esters are evenly dispersed in the diol and dibasic acid raw material system at a higher ratio. In the invention, the phosphate ester is absorbed in biochar, and the phosphate esters form an organic coating on the biochar. The coated biochar is repelled and will not agglomerate together due to the steric hindrance between the phosphate ester, at the same time, the compatibility of the phosphate ester with the raw materials and products in the polyester is relatively good, thereby improving the dispersibility of the catalyst of the invention.

The usage amount of the titanium-based composite catalyst for polyester synthesis of the invention is lower when polyester polymerization is carried out because: the porous biochar of the invention serves as a carrier for the enrichment of titanium silicon catalyst and phosphate, and the porous carrier can embed titanium silicon particles into the pore structure by virtue of its specific pore size and high specific surface area. The existing polyester catalysts include ethylene glycol titanium, tetrabutyl titanate, etc., when added to polyester for catalysis, in order to ensure the catalytic polymerization of polyester, the introduced catalysts are uniformly dispersed in the system to achieve homogeneous mixing to achieve the effect of promoting polymerization, which will result in a relatively high content of the introduced catalyst, and if the dispersion is uneven, serious accidents such as explosion and polymerization will occur. The size of the biomass with the porous structure of the invention is 50-200 nm, which can be used as an independent carrier, and a smaller catalyst can be loaded. The porous biochar serves as a "place" for the titanium silicon catalyst to catalyze the polyester reaction. Such an effect can achieve the dispersibility of the titanium-silicon catalyst, and the addition amount does not need to be very high, and the usage amount is lower.

The polyester prepared by using the titanium-based composite catalyst for polyester synthesis of the invention has a good hue and a narrow molecular weight distribution; this is because: the diol and dibasic acid molecules in the polyester raw material enter the pores through diffusion, react under the action of the titanium silicon catalyst in the pores, and after the reaction is completed, the unreacted dibasic acid and diol in the diffusion system re-enter the pores, while the products of the catalytic reaction diffuse to the outside of the pores. Such a process can achieve full reaction of the raw materials with stronger uniformity, thereby achieving a narrower molecular weight distribution while increasing the molecular weight.

In addition, the titanium-based composite catalyst for polyester synthesis of the invention has an excellent hydrolysis resistance, the specific test method is: the catalyst to be evaluated is prepared into a 250mL of diol aqueous solution with a titanium mass fraction of 0.5 % and different water contents (concentration is 0.5-5 %), and added to a 500mL of round-bottom flask. The round-bottom flask is heated by an electric heating jacket, and a condenser is connected to the upper part of the flask to condense the refluxed rising steam. The same heating rate is controlled, and the time when the white precipitate appears in the flask is compared to evaluate the hydrolysis resistance of the catalyst. The hydrolysis resistance of the titanium composite catalyst for polyester synthesis evaluated by this method is ≥100h, and the hydrolysis resistance in the prior art is 50-100 h. The excellent hydrolysis resistance of the titanium composite catalyst for polyester synthesis of the invention is because the existing titanium catalysts are mostly in the form of chelates or organic titanium. Although the activity of titanium catalysts of this type of structure is relatively high, they are unstable. In the polyester reaction system, the esterification water formed causes hydrolysis and deactivation, at the same time, the polyester prepared by this type of titanium catalyst is generally yellow in color. The invention forms a titanium-silicon complex gel through a sol-gel process, and then forms a titanium-silicon composite powder catalyst through calcinating and grinding. The catalyst has no intermediate structure or metastable chemical structure and has extremely high hydrolysis resistance.

Benefits:
(1) The method for preparing a titanium-based composite catalyst for polyester synthesis of the invention, uses the phosphate ester as an auxiliary antioxidant to improve the dispersibility of the catalyst of the invention;
(2) The method for preparing a titanium-based composite catalyst for polyester synthesis of the invention, uses biochar with a porous structure as a carrier for enriching titanium-silicon catalyst and phosphate ester, which can improve the dispersibility of titanium-silicon catalyst and reduce the added amount of catalyst;
(3) The polyester prepared by using the titanium-based composite catalyst for polyester synthesis of the invention has the following performance indicators: an intrinsic viscosity of 0.60-1.20 dL/g, a number average molecular weight of 15000-40000 g/mol, a molecular weight distribution of 1.2-2.2, a carboxyl content of ≤ 20 mol/t, b value of ≤ 3, an oligomer content of ≤ 1.0 %, an ash content of ≤ 0.05 %; the prepared polyester has a good hue and a narrow molecular weight distribution.

### Detailed Description of the Embodiments

Based on above mentioned method, the following embodiments are carried out for further demonstration in the present invention. It is to be understood that these embodiments are only intended to illustrate the invention and are not intended to limit the scope of the invention. In addition, it should be understood that after reading the contents described in the present invention, those technical personnel in this field can make various changes or modifications to the invention, and these equivalent forms also fall within the scope of the claims attached to the application.

In the preparation process of the titanium-silicon composite catalyst in the invention, the room temperature refers to 25 °C;

the testing methods adopted by the invention are as follows:
(1) average particle size test: the average particle size of the titanium-silicon composite catalyst and the average particle size of the titanium-silicon catalyst in the titanium-silicon composite catalyst are tested by using *"GB*/*T 15445.2-2006 Representation of results of particle size analysis* - *Part 2: Calculation of average particle sizes*/*diameters and moments from particle size distributions";*
(2) average diameter test: the average diameter of the pores in the biochar with porous structure is tested by using *"*GB/T 19587-2017 *Determination of the specific surface area of solids by gas adsorption using the BET method*";
(3) intrinsic viscosity test: the intrinsic viscosity of the prepared polyester is tested by using *"*GB/T 14190-2017 *Testing methods for fiber grade polyester (PET) chip";*
(4) number average molecular weight test: the number average molecular weight and the molecular weight distribution of the prepared polyester are tested by using *"GPC*/*SEC analysis on nylon through an Agilent PLgel chromatographic column using hexafluoroisopropanol (HFIP) and m-cresol as solvents";*
(5) content test: the carboxyl content, oligomer content, b-value and ash content of the prepared polyester are tested by using the standard *"*GB/T 14190-2017 *Testing methods for fiber grade polyester (PET) chip".*

### Example 1

A method for preparing a titanium-based composite catalyst for polyester synthesis, the specific preparation steps are as follows:
(1) preparation of the titanium-silicon catalyst precursor: first, adding the silicon compound (tetramethyl silicate), ethanol, distilled water and nitric acid to the reactor sequentially at the molar ratio of 1:1.5:0.1:0.01 and mixing; then stirring the mixed substance at the speed of 500 r/min and heating at 50 °C, while refluxing for 2 h; after the silicon compound is completely hydrolyzed, adding the titanium compound (tetraethyl titanate), the mass ratio of the added titanium compound to the silicon compound is 4.2:5.8, and mixing evenly; using the constant-pressure buret to add 20 % of the molar amount of the titanium compound of distilled water dropwise at the dropping rate of 10 mL/min, and refluxing at 50 °C for 6 h again after dropping to prepare the titanium-silicon catalyst precursor;
(2) preparation of the titanium-silicon composite catalyst: adding the titanium-silicon catalyst precursor obtained in step (1) to the biochar material with the lignin content of 20 % in the mass ratio of 0.01:1, and mixing evenly; and aging the mixed mixture at room temperature before drying in the blast drying oven at 100 °C for 20 h, to remove water and ethanol from a reaction system; then putting the dried mixture in the muffle furnace, setting the calcination temperature of 400 °C, the heating rate of 10 °C/min, and the calcination time in the muffle furnace of 5 h; after the calcination is completed, taking out the calcined product and cooling naturally, then carrying out the wet grinding, the small-sized titanium silicon catalyst powder is squeezed into the porous structure of the biomass under the mechanical force, and finally obtain the titanium-silicon composite catalyst with the average particle size of 400 nm;
   the prepared titanium-silicon composite catalyst consists of the biochar with porous structure and the titanium-silicon catalyst loaded in the porous structure; the average pore size of the pores in the biochar with porous structure is 200 nm; the average particle size of the titanium-silicon catalyst in the titanium-silicon composite catalyst is 100 nm;
(3) preparation of the titanium-based composite catalyst for polyester synthesis: mixing the titanium-silicon composite catalyst with the phosphate ester (phosphate monoester) in the mass ratio of 1:0.001 to obtain the titanium-based composite catalyst for polyester synthesis;
   the titanium-based composite catalyst for polyester synthesis consists of the phosphate ester and the titanium-silicon composite catalyst; wherein the phosphate ester is adsorbed and wrapped on the surface of the titanium-silicon composite catalyst; the phosphate ester is combined with the titanium-silicon catalyst in the titanium-silicon composite catalyst by van der Waals force;
   in the prepared titanium-based composite catalyst for polyester synthesis, the mass ratio of the titanium-silicon composite catalyst to the phosphate ester is 1:0.1.

### Example 2

A method for preparing a titanium-based composite catalyst for polyester synthesis, the specific preparation steps are as follows:
(1) preparation of the titanium-silicon catalyst precursor: first, adding the silicon compound (tetraethyl silicate), ethanol, distilled water and nitric acid to the reactor sequentially at the molar ratio of 1:2:0.5:0.1 and mixing; then stirring the mixed substance at the speed of 100 r/min and heating at 80 °C, while refluxing for 4 h; after the silicon compound is completely hydrolyzed, adding the titanium compound (tetrapropyl titanate), the mass ratio of the added titanium compound to the silicon compound is 4.4:5.6, and mixing evenly; using the constant-pressure buret to add 25 % of the molar amount of the titanium compound of distilled water dropwise at the dropping rate of 50 mL/min, and refluxing at 80 °C for 2 h again after dropping to prepare the titanium-silicon catalyst precursor;
(2) preparation of the titanium-silicon composite catalyst: adding the titanium-silicon catalyst precursor obtained in step (1) to the biochar material with the lignin content of 21 % in the mass ratio of 0.02:1, and mixing evenly; and aging the mixed mixture at room temperature before drying in the blast drying oven at 140 °C for 8 h, to remove water and ethanol from a reaction system; then putting the dried mixture in the muffle furnace, setting the calcination temperature of 800 °C, the heating rate of 10 °C/min, and the calcination time in the muffle furnace of 2 h; after the calcination is completed, taking out the calcined product and cooling naturally, then carrying out the wet grinding, the small-sized titanium silicon catalyst powder is squeezed into the porous structure of the biomass under the mechanical force, and finally obtain the titanium-silicon composite catalyst with the average particle size of 350 nm;
   the prepared titanium-silicon composite catalyst consists of the biochar with porous structure and the titanium-silicon catalyst loaded in the porous structure; the average pore size of the pores in the biochar with porous structure is 150 nm; the average particle size of the titanium-silicon catalyst in the titanium-silicon composite catalyst is 80 nm;
(3) preparation of the titanium-based composite catalyst for polyester synthesis: mixing the titanium-silicon composite catalyst with the phosphate ester (phosphate diester) in the mass ratio of 1:0.5 to obtain the titanium-based composite catalyst for polyester synthesis;
   the titanium-based composite catalyst for polyester synthesis consists of the phosphate ester and the titanium-silicon composite catalyst; wherein the phosphate ester is adsorbed and wrapped on the surface of the titanium-silicon composite catalyst; the phosphate ester is combined with the titanium-silicon catalyst in the titanium-silicon composite catalyst by van der Waals force;
   in the prepared titanium-based composite catalyst for polyester synthesis, the mass ratio of the titanium-silicon composite catalyst to the phosphate ester is 1:0.2.

### Example 3

A method for preparing a titanium-based composite catalyst for polyester synthesis, the specific preparation steps are as follows:
(1) preparation of the titanium-silicon catalyst precursor: first, adding the silicon compound (tetrapropyl silicate), ethanol, distilled water and nitric acid to the reactor sequentially at the molar ratio of 1:1.5:0.5:0.05 and mixing; then stirring the mixed substance at the speed of 600 r/min and heating at 60 °C, while refluxing for 3 h; after the silicon compound is completely hydrolyzed, adding the titanium compound (tetraisopropyl titanate), the mass ratio of the added titanium compound to the silicon compound is 4.5:5.5, and mixing evenly; using the constant-pressure buret to add 30 % of the molar amount of the titanium compound of distilled water dropwise at the dropping rate of 20 mL/min, and refluxing at 60 °C for 5 h again after dropping to prepare the titanium-silicon catalyst precursor;
(2) preparation of the titanium-silicon composite catalyst: adding the titanium-silicon catalyst precursor obtained in step (1) to the biochar material with the lignin content of 22 % in the mass ratio of 0.04:1, and mixing evenly; and aging the mixed mixture at room temperature before drying in the blast drying oven at 110 °C for 18 h, to remove water and ethanol from a reaction system; then putting the dried mixture in the muffle furnace, setting the calcination temperature of 500 °C, the heating rate of 10 °C/min, and the calcination time in the muffle furnace of 4 h; after the calcination is completed, taking out the calcined product and cooling naturally, then carrying out the wet grinding, the small-sized titanium silicon catalyst powder is squeezed into the porous structure of the biomass under the mechanical force, and finally obtain the titanium-silicon composite catalyst with the average particle size of 280 nm;
   the prepared titanium-silicon composite catalyst consists of the biochar with porous structure and the titanium-silicon catalyst loaded in the porous structure; the average pore size of the pores in the biochar with porous structure is 120 nm; the average particle size of the titanium-silicon catalyst in the titanium-silicon composite catalyst is 60 nm;
(3) preparation of the titanium-based composite catalyst for polyester synthesis: mixing the titanium-silicon composite catalyst with the phosphate ester (phosphate triester) in the mass ratio of 1:0.1 to obtain the titanium-based composite catalyst for polyester synthesis;
   the titanium-based composite catalyst for polyester synthesis consists of the phosphate ester and the titanium-silicon composite catalyst; wherein the phosphate ester is adsorbed and wrapped on the surface of the titanium-silicon composite catalyst; the phosphate ester is combined with the titanium-silicon catalyst in the titanium-silicon composite catalyst by van der Waals force;
   in the prepared titanium-based composite catalyst for polyester synthesis, the mass ratio of the titanium-silicon composite catalyst to the phosphate ester is 1:0.4.

### Example 4

A method for preparing a titanium-based composite catalyst for polyester synthesis, the specific preparation steps are as follows:
(1) preparation of the titanium-silicon catalyst precursor: first, adding the silicon compound (tetrabutyl silicate), ethanol, distilled water and nitric acid to the reactor sequentially at the molar ratio of 1:1.8:0.3:0.05 and mixing; then stirring the mixed substance at the speed of 700 r/min and heating at 70 °C, while refluxing for 2.5 h; after the silicon compound is completely hydrolyzed, adding the titanium compound (tetrabutyl titanate), the mass ratio of the added titanium compound to the silicon compound is 5:5, and mixing evenly; using the constant-pressure buret to add 40 % of the molar amount of the titanium compound of distilled water dropwise at the dropping rate of 30 mL/min, and refluxing at 70 °C for 4 h again after dropping to prepare the titanium-silicon catalyst precursor;
(2) preparation of the titanium-silicon composite catalyst: adding the titanium-silicon catalyst precursor obtained in step (1) to the biochar material with the lignin content of 23 % in the mass ratio of 0.01:1, and mixing evenly; and aging the mixed mixture at room temperature before drying in the blast drying oven at 120 °C for 12 h, to remove water and ethanol from a reaction system; then putting the dried mixture in the muffle furnace, setting the calcination temperature of 600 °C, the heating rate of 10 °C/min, and the calcination time in the muffle furnace of 3 h; after the calcination is completed, taking out the calcined product and cooling naturally, then carrying out the wet grinding, the small-sized titanium silicon catalyst powder is squeezed into the porous structure of the biomass under the mechanical force, and finally obtain the titanium-silicon composite catalyst with the average particle size of 260 nm;
   the prepared titanium-silicon composite catalyst consists of the biochar with porous structure and the titanium-silicon catalyst loaded in the porous structure; the average pore size of the pores in the biochar with porous structure is 100 nm; the average particle size of the titanium-silicon catalyst in the titanium-silicon composite catalyst is 55 nm;
(3) preparation of the titanium-based composite catalyst for polyester synthesis: mixing the titanium-silicon composite catalyst with the phosphate ester (a mixture of phosphate monoester and phosphate diester with a mass ratio of 1:2) in the mass ratio of 1:0.2 to obtain the titanium-based composite catalyst for polyester synthesis;
   the titanium-based composite catalyst for polyester synthesis consists of the phosphate ester and the titanium-silicon composite catalyst; wherein the phosphate ester is adsorbed and wrapped on the surface of the titanium-silicon composite catalyst; the phosphate ester is combined with the titanium-silicon catalyst in the titanium-silicon composite catalyst by van der Waals force;
   in the prepared titanium-based composite catalyst for polyester synthesis, the mass ratio of the titanium-silicon composite catalyst to the phosphate ester is 1:0.5.

### Example 5

A method for preparing a titanium-based composite catalyst for polyester synthesis, the specific preparation steps are as follows:
(1) preparation of the titanium-silicon catalyst precursor: first, adding the silicon compound (a mixture of tetramethyl silicate and tetraethyl silicate with a mass ratio of 1:1), ethanol, distilled water and nitric acid to the reactor sequentially at the molar ratio of 1 :2:0.3:0.05 and mixing; then stirring the mixed substance at the speed of 800 r/min and heating at 50 °C, while refluxing for 2 h; after the silicon compound is completely hydrolyzed, adding the titanium compound (tetraisooctyl titanate), the mass ratio of the added titanium compound to the silicon compound is 5.2:4.8, and mixing evenly; using the constant-pressure buret to add 30 % of the molar amount of the titanium compound of distilled water dropwise at the dropping rate of 40 mL/min, and refluxing at 80 °C for 2 h again after dropping to prepare the titanium-silicon catalyst precursor;
(2) preparation of the titanium-silicon composite catalyst: adding the titanium-silicon catalyst precursor obtained in step (1) to the biochar material with the lignin content of 24 % in the mass ratio of 0.15:1, and mixing evenly; and aging the mixed mixture at room temperature before drying in the blast drying oven at 130 °C for 10 h, to remove water and ethanol from a reaction system; then putting the dried mixture in the muffle furnace, setting the calcination temperature of 700 °C, the heating rate of 10 °C/min, and the calcination time in the muffle furnace of 2 h; after the calcination is completed, taking out the calcined product and cooling naturally, then carrying out the wet grinding, the small-sized titanium silicon catalyst powder is squeezed into the porous structure of the biomass under the mechanical force, and finally obtain the titanium-silicon composite catalyst with the average particle size of 180 nm;
   the prepared titanium-silicon composite catalyst consists of the biochar with porous structure and the titanium-silicon catalyst loaded in the porous structure; the average pore size of the pores in the biochar with porous structure is 75 nm; the average particle size of the titanium-silicon catalyst in the titanium-silicon composite catalyst is 40 nm;
(3) preparation of the titanium-based composite catalyst for polyester synthesis: mixing the titanium-silicon composite catalyst with the phosphate ester (a mixture of phosphate diester and phosphate triester with a mass ratio of 2:1) in the mass ratio of 1:0.3 to obtain the titanium-based composite catalyst for polyester synthesis;
   the titanium-based composite catalyst for polyester synthesis consists of the phosphate ester and the titanium-silicon composite catalyst; wherein the phosphate ester is adsorbed and wrapped on the surface of the titanium-silicon composite catalyst; the phosphate ester is combined with the titanium-silicon catalyst in the titanium-silicon composite catalyst by van der Waals force;
   in the prepared titanium-based composite catalyst for polyester synthesis, the mass ratio of the titanium-silicon composite catalyst to the phosphate ester is 1:0.8.

### Example 6

A method for preparing a titanium-based composite catalyst for polyester synthesis, the specific preparation steps are as follows:
(1) preparation of the titanium-silicon catalyst precursor: first, adding the silicon compound (a mixture of tetramethyl silicate, tetraethyl silicate and tetrapropyl silicate with a mass ratio of 1:1:1), ethanol, distilled water and nitric acid to the reactor sequentially at the molar ratio of 1:1.8:0.5:0.1 and mixing; then stirring the mixed substance at the speed of 900 r/min and heating at 50 °C, while refluxing for 3.5 h; after the silicon compound is completely hydrolyzed, adding the titanium compound (titanium tetrachloride), the mass ratio of the added titanium compound to the silicon compound is 6:4, and mixing evenly; using the constant-pressure buret to add 35 % of the molar amount of the titanium compound of distilled water dropwise at the dropping rate of 50 mL/min, and refluxing at 50 °C for 5 h again after dropping to prepare the titanium-silicon catalyst precursor;
(2) preparation of the titanium-silicon composite catalyst: adding the titanium-silicon catalyst precursor obtained in step (1) to the biochar material with the lignin content of 25 % in the mass ratio of 0.20:1, and mixing evenly; and aging the mixed mixture at room temperature before drying in the blast drying oven at 125 °C for 11 h, to remove water and ethanol from a reaction system; then putting the dried mixture in the muffle furnace, setting the calcination temperature of 650 °C, the heating rate of 10 °C/min, and the calcination time in the muffle furnace of 2.5 h; after the calcination is completed, taking out the calcined product and cooling naturally, then carrying out the wet grinding, the small-sized titanium silicon catalyst powder is squeezed into the porous structure of the biomass under the mechanical force, and finally obtain the titanium-silicon composite catalyst with the average particle size of 100 nm;
   the prepared titanium-silicon composite catalyst consists of the biochar with porous structure and the titanium-silicon catalyst loaded in the porous structure; the average pore size of the pores in the biochar with porous structure is 50 nm; the average particle size of the titanium-silicon catalyst in the titanium-silicon composite catalyst is 20 nm;
(3) preparation of the titanium-based composite catalyst for polyester synthesis: mixing the titanium-silicon composite catalyst with the phosphate ester (a mixture of phosphate monoester, phosphate diester and phosphate triester with a mass ratio of 1:1:1) in the mass ratio of 1:0.4 to obtain the titanium-based composite catalyst for polyester synthesis;
   the titanium-based composite catalyst for polyester synthesis consists of the phosphate ester and the titanium-silicon composite catalyst; wherein the phosphate ester is adsorbed and wrapped on the surface of the titanium-silicon composite catalyst; the phosphate ester is combined with the titanium-silicon catalyst in the titanium-silicon composite catalyst by van der Waals force;
   in the prepared titanium-based composite catalyst for polyester synthesis, the mass ratio of the titanium-silicon composite catalyst to the phosphate ester is 1:1.

### Example 7

An application of a titanium-based composite catalyst for polyester synthesis, the specific steps are as follows:
(1) using dicarboxylic acid or its derivatives (terephthalic acid) and the diol (ethylene glycol) to carry out the esterification reaction at 230 °C, and adding 10 ppm (calculated as titanium equivalent in the catalyst) of the titanium-based composite catalyst for polyester synthesis prepared in Example 1 before the esterification reaction, the pressure of the esterification reaction is 0.1 MPa, and the esterification reaction time is 3 h, to obtain the prepolymer;
(2) carrying out the polycondensation reaction of the prepolymer under vacuum conditions, the polycondensation reaction temperature is 270 °C, the pressure of the polycondensation reaction is 20 Pa, and the polycondensation reaction time is 4 h, finally obtaining the polyester;
the performance indicators of the obtained polyester are shown in Table 1.

### Example 8

An application of a titanium-based composite catalyst for polyester synthesis, the specific steps are as follows:
(1) using dicarboxylic acid or its derivatives (phthalic acid) and the diol (propylene glycol) to carry out the esterification reaction at 260 °C, and adding 1 ppm (calculated as titanium equivalent in the catalyst) of the titanium-based composite catalyst for polyester synthesis prepared in Example 2 before the esterification reaction, the pressure of the esterification reaction is 0.15 MPa, and the esterification reaction time is 2 h, to obtain the prepolymer;
(2) carrying out the polycondensation reaction of the prepolymer under vacuum conditions, the polycondensation reaction temperature is 290 °C, the pressure of the polycondensation reaction is 30 Pa, and the polycondensation reaction time is 1 h, finally obtaining the polyester;
Table 1.

### Example 9

An application of a titanium-based composite catalyst for polyester synthesis, the specific steps are as follows:
(1) using dicarboxylic acid or its derivatives (isophthalic acid) and the diol (butylene glycol) to carry out the esterification reaction at 240 °C, and adding 4 ppm (calculated as titanium equivalent in the catalyst) of the titanium-based composite catalyst for polyester synthesis prepared in Example 3 before the esterification reaction, the pressure of the esterification reaction is 0.20 MPa, and the esterification reaction time is 2 h, to obtain the prepolymer;
(2) carrying out the polycondensation reaction of the prepolymer under vacuum conditions, the polycondensation reaction temperature is 275 °C, the pressure of the polycondensation reaction is 40 Pa, and the polycondensation reaction time is 3 h, finally obtaining the polyester;
the performance indicators of the obtained polyester are shown in Table 1.

### Example 10

An application of a titanium-based composite catalyst for polyester synthesis, the specific steps are as follows:
(1) using dicarboxylic acid or its derivatives (diphenyl diphthalic acid) and the diol (hexylene glycol) to carry out the esterification reaction at 250 °C, and adding 3 ppm (calculated as titanium equivalent in the catalyst) of the titanium-based composite catalyst for polyester synthesis prepared in Example 4 before the esterification reaction, the pressure of the esterification reaction is 0.22 MPa, and the esterification reaction time is 1.5 h, to obtain the prepolymer;
(2) carrying out the polycondensation reaction of the prepolymer under vacuum conditions, the polycondensation reaction temperature is 280 °C, the pressure of the polycondensation reaction is 45 Pa, and the polycondensation reaction time is 2 h, finally obtaining the polyester;
the performance indicators of the obtained polyester are shown in Table 1.

### Example 11

An application of a titanium-based composite catalyst for polyester synthesis, the specific steps are as follows:
(1) using dicarboxylic acid or its derivatives (oxalic acid) and the diol (ethylene glycol) to carry out the esterification reaction at 235 °C, and adding 5 ppm (calculated as titanium equivalent in the catalyst) of the titanium-based composite catalyst for polyester synthesis prepared in Example 5 before the esterification reaction, the pressure of the esterification reaction is 0.18 MPa, and the esterification reaction time is 2.5 h, to obtain the prepolymer;
(2) carrying out the polycondensation reaction of the prepolymer under vacuum conditions, the polycondensation reaction temperature is 285 °C, the pressure of the polycondensation reaction is 50 Pa, and the polycondensation reaction time is 1.5 h, finally obtaining the polyester;
the performance indicators of the obtained polyester are shown in Table 1.

### Example 12

An application of a titanium-based composite catalyst for polyester synthesis, the specific steps are as follows:
(1) using dicarboxylic acid or its derivatives (succinic acid) and the diol (propylene glycol) to carry out the esterification reaction at 245 °C, and adding 4.5 ppm (calculated as titanium equivalent in the catalyst) of the titanium-based composite catalyst for polyester synthesis prepared in Example 6 before the esterification reaction, the pressure of the esterification reaction is 0.20 MPa, and the esterification reaction time is 1 h, to obtain the prepolymer;
(2) carrying out the polycondensation reaction of the prepolymer under vacuum conditions, the polycondensation reaction temperature is 270 °C, the pressure of the polycondensation reaction is 55 Pa, and the polycondensation reaction time is 2.5 h, finally obtaining the polyester;
the performance indicators of the obtained polyester are shown in Table 1.

### Example 13

An application of a titanium-based composite catalyst for polyester synthesis, the specific steps are as follows:
(1) using dicarboxylic acid or its derivatives (adipic acid) and the diol (butylene glycol) to carry out the esterification reaction at 255 °C, and adding 4 ppm (calculated as titanium equivalent in the catalyst) of the titanium-based composite catalyst for polyester synthesis prepared in Example 1 before the esterification reaction, the pressure of the esterification reaction is 0.25 MPa, and the esterification reaction time is 1.2 h, to obtain the prepolymer;
(2) carrying out the polycondensation reaction of the prepolymer under vacuum conditions, the polycondensation reaction temperature is 290 °C, the pressure of the polycondensation reaction is 60 Pa, and the polycondensation reaction time is 1 h, finally obtaining the polyester;
the performance indicators of the obtained polyester are shown in Table 1.

### Example 14

An application of a titanium-based composite catalyst for polyester synthesis, the specific steps are as follows:
(1) using dicarboxylic acid or its derivatives (dimethyl terephthalate) and the diol (hexylene glycol) to carry out the esterification reaction at 240 °C, and adding 3.5 ppm (calculated as titanium equivalent in the catalyst) of the titanium-based composite catalyst for polyester synthesis prepared in Example 2 before the esterification reaction, the pressure of the esterification reaction is 0.28 MPa, and the esterification reaction time is 2 h, to obtain the prepolymer;
(2) carrying out the polycondensation reaction of the prepolymer under vacuum conditions, the polycondensation reaction temperature is 275 °C, the pressure of the polycondensation reaction is 80 Pa, and the polycondensation reaction time is 2 h, finally obtaining the polyester;
the performance indicators of the obtained polyester are shown in Table 1.

### Example 15

An application of a titanium-based composite catalyst for polyester synthesis, the specific steps are as follows:
(1) using dicarboxylic acid or its derivatives (diethyl terephthalate) and the diol (ethylene glycol) to carry out the esterification reaction at 235 °C, and adding 6.5 ppm (calculated as titanium equivalent in the catalyst) of the titanium-based composite catalyst for polyester synthesis prepared in Example 3 before the esterification reaction, the pressure of the esterification reaction is 0.30 MPa, and the esterification reaction time is 1.5 h, to obtain the prepolymer;
(2) carrying out the polycondensation reaction of the prepolymer under vacuum conditions, the polycondensation reaction temperature is 280 °C, the pressure of the polycondensation reaction is 100 Pa, and the polycondensation reaction time is 2.5 h, finally obtaining the polyester;
the performance indicators of the obtained polyester are shown in Table 1.

**Table 1 Performance Indicators of The Obtained Polyester**

| Performan ce Indicators | Intrinsi c Viscosi ty (dL/g) | Number Averag e Molecul ar Weight (g/mol) | Molecula r Weight Distributi on | Carbox yl Conten t (mol/t) | b - valu e | Oligom er Conten t | Ash Conte nt |
|---|---|---|---|---|---|---|---|
| Example 7 | 0.6 | 15000 | 1.2 | 20 | 2.05 | 1% | 0.01% |
| Example 8 | 0.66 | 18500 | 1.24 | 19 | 2.1 | 0.95% | 0.012 % |
| Example 9 | 0.7 | 20200 | 1.31 | 18 | 2.2 | 0.9% | 0.015 % |
| Example 10 | 0.74 | 22400 | 1.36 | 16 | 2.25 | 0.85% | 0.02% |
| Example 11 | 0.8 | 24080 | 1.42 | 15 | 2.35 | 0.82% | 0.025 % |
| Example 12 | 0.82 | 26060 | 1.47 | 14 | 2.4 | 0.78% | 0.03% |
| Example 13 | 0.93 | 28100 | 1.66 | 12 | 2.45 | 0.75% | 0.032 % |
| Example 14 | 0.97 | 32500 | 1.84 | 11 | 2.55 | 0.71% | 0.035 % |
| Example 15 | 1.2 | 40000 | 2.2 | 8 | 3 | 0.65% | 0.05% |

## Claims

1. A method for preparing a titanium-based composite catalyst for polyester synthesis, comprising the following steps:
(1) adding a silicon compound, ethanol, distilled water and nitric acid to a reactor sequentially and mixing, and then adding a titanium compound to prepare a titanium-silicon catalyst precursor; the silicon compound is more than one selected from tetramethyl silicate, tetraethyl silicate, tetrapropyl silicate and tetrabutyl silicate; the titanium compound is more than one selected from tetraethyl titanate, tetrapropyl titanate, tetraisopropyl titanate, tetrabutyl titanate, tetraisooctyl titanate and titanium tetrachloride; a ratio of the added mass of the titanium compound to the mass of the silicon compound is 4:6-6:4 in step (1);
(2) adding the titanium-silicon catalyst precursor obtained in step (1) to a biochar material in a certain mass ratio and mixing evenly, and aging, drying, calcining and wet grinding to obtain a titanium-silicon composite catalyst; a mass ratio of the titanium-silicon catalyst precursor to the biochar material is (0.01-0.2):1; a lignin content in the biochar material is not less than 20 %;
wherein the titanium-silicon composite catalyst comprises a biochar with a porous structure and a titanium-silicon catalyst loaded in the porous structure;
wherein an average pore size of the pores in the biochar with porous structure is 50-200 nm;
wherein an average particle size of the titanium-silicon catalyst in the titanium-silicon composite catalyst is 20-100 nm;
(3) mixing the titanium-silicon composite catalyst and a phosphate ester with a mass ratio of 1:(0.001-0.5) to obtain the titanium-based composite catalyst for polyester synthesis.

2. The method of claim 1, wherein the phosphate ester is more than one selected from a phosphate monoester, a phosphate diester and a phosphate triester.

3. The method of claim 1, wherein the average particle size of the titanium-silicon composite catalyst is 100-400 nm.

4. The method of claim 1, wherein the specific steps are as follows:
(1) a preparation of the titanium-silicon catalyst precursor: first, adding the silicon compound, ethanol, distilled water and nitric acid to the reactor sequentially and mixing; then stirring and heating the mixed substance while refluxing; after a silicon compound is completely hydrolyzed, adding a titanium compound and mixing evenly; adding an appropriate amount of distilled water dropwise at a certain rate, and refluxing again after dropping to prepare the titanium-silicon catalyst precursor;
(2) a preparation of the titanium-silicon composite catalyst: adding the titanium-silicon catalyst precursor obtained in step (1) to the biochar material in a certain mass ratio and mixing evenly, and aging the mixed mixture at room temperature before drying to remove water and ethanol from a reaction system; then putting the dried mixture in a muffle furnace, setting a calcination temperature, a heating rate and a calcination time; after the calcination is completed, taking out the calcined product and cooling naturally, and finally obtain the titanium-silicon composite catalyst by wet grinding;
(3) a preparation of the titanium-based composite catalyst for polyester synthesis: mixing the titanium-silicon composite catalyst with the phosphate ester to obtain the titanium-based composite catalyst for polyester synthesis.

5. The method of claim 4, in step (1), when adding the silicon compound, ethanol, distilled water and nitric acid sequentially, a molar ratio of the silicon compound, ethanol, distilled water and nitric acid is 1:(1.5-2):(0.1-0.5):(0.01-0.1); parameters for stirring and heating while refluxing are: a heating temperature of 50-80 °C, a stirring speed of 500-1000 r/min, and a reflux time of 2-4 h; adding dropwise at a certain rate refers to a dropwise addition rate of 10-50 mL/min; refluxing again after dropping means after dropping, refluxing at 50-80 °C for 2-6 h.

6. The method of claim 4, in step (2), drying after aging refers to dry in a blast drying oven at 100-140 °C for 8-20 h; the calcination temperature is 400-800 °C, the heating rate is 10 °C/min, and the calcination time is 2-5 h.

7. A titanium-based composite catalyst for polyester synthesis prepared by the method according to any one of claims 1-6, wherein the prepared titanium-based composite catalyst for polyester synthesis comprises the phosphate ester and the titanium-silicon composite catalyst;
wherein the phosphate ester is adsorbed and wrapped on the surface of the titanium-silicon composite catalyst; the phosphate ester is combined with the titanium-silicon catalyst in the titanium-silicon composite catalyst by van der Waals force;
in the titanium-based composite catalyst for polyester synthesis, the mass ratio of the titanium-silicon composite catalyst to the phosphate ester is 1:(0.1-1).

8. An application of the titanium-based composite catalyst for polyester synthesis according to claim 7, comprising: using a dicarboxylic acid or its derivatives and a diol to carry out an esterification reaction, and adding the titanium-based composite catalyst for polyester synthesis before the esterification reaction to obtain a prepolymer; and then carrying out a polycondensation reaction of the prepolymer to obtain a polyester;
based on the equivalent of titanium in the catalyst, the added amount of the titanium-based composite catalyst for polyester synthesis is 1-10 ppm.
